# EUROPEAN PATENT APPLICATION

(11) **EP 2 399 882 A2**
(43) Date of publication of application: **28.12.2011**
(21) Application number: 11171807.8
(22) Date of filing: 28.06.2011
(51) Int. Cl.: C04B 35/632, C04B 35/628

(54) **Composite powders**

(30) Priority: 28.06.2010 US 824642
(71) Applicant: United Technologies Corporation, Hartford, CT 06101 (US)
(72) Inventor: Sheedy, Paul, Vernon, CT Connecticut 06066 (US); Schmidt, Wayde R, Pomfret Center, CT Connecticut 06259 (US)
(74) Representative: Hall, Matthew Benjamin

(57) **Abstract**

A composite powder (20; 120; 220; 320; 420; 520; 620) includes a plurality of loose particles (22; 422) having discrete regions (24; 124; 224; 324; 524; 624) of a first material and discrete regions (26; 126; 226a; 326; 426; 526a; 626) of a second material that is different than the first material. At least one of the first material and the second material is a chemical precursor to a third material.

## Description

This disclosure relates to powders for thermal spray deposition or other uses.

Ceramic and metallic materials, such as superalloys, are attractive materials for use in articles that operate under severe environmental conditions. As an example, gas turbine engine components are subjected to high temperatures, corrosive and oxidative conditions, and elevated stress levels. In order to improve the thermal and oxidative stability of these components, various types of coatings have been used to protect the article from the elevated temperature conditions or corrosive/oxidative and stress-producing environments. Likewise, many other types of components or articles may also utilize protective coatings.

Thermal spraying is one technique for depositing protective coatings onto components. As an example, a feedstock of metal powder, alloy powder, or oxide powder with desired properties and specific deposition parameters may be deposited using thermal spraying.

A composite powder includes a plurality of loose particles having discrete regions of a first material and discrete regions of a second material that is different than the first material. At least one of the first material and the second material is a chemical precursor to a third material.

In another aspect, a composite powder includes a plurality of loose particles having a first material and a second material that is different than the first material. At least one of the first material and the second material is a chemical precursor to a third material.

In another aspect, a composite powder includes a plurality of loose particles having discrete regions of a first material that is an inorganic material and discrete regions of a second material that is a chemical precursor to a third material.

Certain preferred embodiments of the present invention will now be described in greater detail by way of example only and with reference to the accompanying drawings in which:
Figure 1 illustrates an example composite powder;
Figure 2 illustrates another example composite powder;
Figure 3 illustrates another example composite powder;
Figure 4 illustrates another example composite powder;
Figure 5 illustrates another example composite powder;
Figure 6 illustrates another example composite powder; and
Figure 7 illustrates another example composite powder.

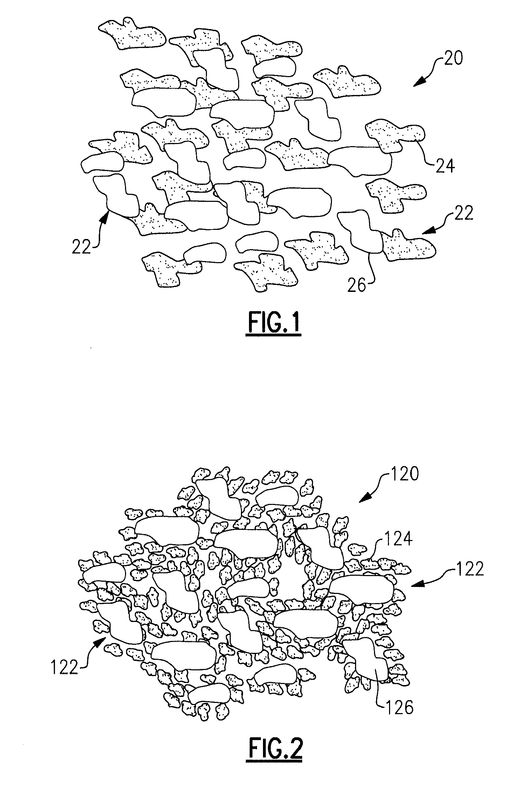

Figure 1 illustrates an example composite powder 20 that may be used in a thermal spraying process to deposit a protective composite coating onto an article or component (i.e., a substrate). Known thermal spray parameters may be adjusted to enable deposition of the composite powder 20. In the illustrated example, the composite powder 20 includes a plurality of loose particles 22 that, together, make up the composite powder 20. The loose particles 22 generally include discrete regions 24 of a first material and discrete regions 26 of a second material. The second material is different than the first material, and at least one of the first material and the second material is a chemical precursor to a third, different material.

In the disclosed examples, the first and second materials are non-sacrificial in that each material is either deposited without chemical transformation to make the protective coating or chemically reacts or converts during deposition or subsequent to deposition to form one or more other materials as the protective coating. In certain instances, materials, such as organic binders, may also be used in small amounts and are volatile such that they are substantially lost, or sacrificed, during thermal spraying and are not intended to form a part of the deposited coating. In some examples, the chemical precursor may also serve as a binder.

The chemical precursor may be a compound or substance that is capable of chemically reacting or capable of conversion to produce a third material. In this regard, the third material may be a fully or partially converted product of the chemical precursor, or a product of the chemical precursor in a reaction with the first material, the second material, or both. In some examples, the chemical precursor may be a salt, such as a metallic salt, an organometallic compound or complex, a sol-gel precursor, a preceramic polymer or oligomeric material, a partially converted preceramic polymer, or carbon or a combination of precursors. The salt or organometallic material may later be reduced, such as during the thermal spraying process, to deposit the metal of the salt or organometallic material as the third material. Similarly, the sol-gel, preceramic polymer, oligomeric material or carbon may be reacted or converted (at least partially), such as during the thermal spraying process, to produce a ceramic-containing material as the third material.

The metal salts, organometallic materials, preceramic polymers or oligomeric materials, or other chemical precursors that may be used are not limited to any particular type or kind and may be selected based on the desired properties of the coating that is to be produced. However, for aerospace components, chemical precursors to metals, metal-containing compounds, such as intermetallics, and ceramic-containing phases may be desired. In some examples, the metal salt may be a nitrate, acetate or carbonate, such as aluminum nitrate, aluminum acetate or magnesium carbonate. In some examples, the organometallic materials may be acetylacetonate, octanoate, oxalate, stearate, hydroxide or alkoxide, such as nickel acetylacetonate, nickel octanoate, nickel oxalate, nickel stearate, copper hydroxide or silicon alkoxide, respectively. In some examples of preceramic polymers, the preceramic polymers may be ones that thermally convert into silicon-based ceramic materials, such as silicon carbide, silicon oxycarbide, silicon oxynitride, or glass, glass/ceramic material, other oxides, carbides, nitrides, borides, combinations thereof, or the like, including composite and heteroatomic phases.

As described, at least one of the first material and the second material is a chemical precursor to a third, different material. For instance, the first material may be the chemical precursor and the second material may be a different chemical precursor or an inorganic material, such as a metallic material or a ceramic material. In some examples, the metal may be silicon, aluminum, molybdenum, boron, nickel, zirconium, hafnium, titanium, tungsten, cobalt, copper, chromium, iron, alloyed metal or combinations thereof, but generally may be selected from transition and rare earth metals. The ceramic material may include carbides, oxides, nitrides, borides, silicides, oxycarbides, oxynitrides, carbonitrides, aluminides, silicates, titanates, phosphates, phosphides and combinations thereof.

The volume percentage of the discrete regions 24 of the first material relative to the combined volume of the discrete regions 24 of the first material and the discrete regions 26 of the second material may be 5%-95%. That is, the composite powder 20 may include a composition having between 5 vol% and 95 vol% of the first material and a remainder of the second material.

In this example, the structure of the composite powder 20 is such that the discrete regions 24 of the first material exist as a first set of particles and the discrete regions 26 of the second material exist as a second set of particles that are mixed with the first set of particles. That is, the composite powder 20 is a physical mixture of two different kinds of particles, one being particles of the first material and the other being particles of the second material.

The composite powder 20 may be a blend of two or more different kinds of solid powders in a desired ratio, depending upon the desired composition of the coating that is to be deposited using the composite powder 20. The powders may be blended by mechanical, acoustic or other techniques. For instance, the composite powder 20 may be a blend of 75 vol% of a metal powder, such as nickel, and 25 vol% of a chemical precursor, such as a vinyl polysilazane that is convertible to silicon carbonitride ceramic (Si-C-N). Particle sizes, size distributions and morphologies of the powders may be selected to achieve desirable mixtures.

The following examples disclose additional composite powder structures and fabrication methods. It is to be understood that the disclosed examples may utilize the same materials and compositions as described above with regard to the examples of Figure 1. In this disclosure, like reference numerals designate like elements where appropriate and reference numerals with the addition of one-hundred or multiples thereof designate modified elements. The modified elements are understood to incorporate the same features and benefits of the corresponding original elements.

Figure 2 illustrates another example composite powder 120. In the illustrated example, the discrete regions 124 of a first material exist as a first set of particles and the discrete regions 126 of the second material exist as a second set of particles that are mixed with the first set of particles. However, unlike the structure in Figure 1, the average particle size of the first set of particles is smaller than the average particle size of the second set of particles. In some examples, the average particle size of the first set of particles and the average particle size of the second set of particles may be represented as a ratio. For instance, the ratio may be between 0.01 and 0.4.

Additionally, at least a portion of the particles of the first set of particles are attached to the second particles as a cladding. A small amount of organic or inorganic binder or other adhesive agent may be added to the composite powder 120 to bind the smaller particles to the larger particles. In some instances, the binder is a chemical precursor.

In one example, the smaller particles may be a chemical precursor, such as a preceramic polymer, an oligomeric material or sol-gel precursor and the larger particles may be a metallic material, ceramic, glass or glass/ceramic material, or another type of chemical precursor. Alternatively, the larger particles may include a chemical precursor and the smaller particles may be a metallic material, ceramic, glass or glass/ceramic material, a converted precursor material or another type of chemical precursor.

Mechanical mixing, such as milling or tumbling, may be used to attach, or clad, the smaller particles to the larger particles. That is, during the mechanical mixing, the particles impact each other and mechanically interlock such that at least some of the particles of the first material attach to the particles of the second material. Additionally, if the smaller particles are a chemical precursor, the chemical precursor can initially be a liquid, semi-solid, or solid material prior to attachment to the larger particles. If a binder is used, the binder may be a liquid or semi-solid form of the same nominal composition of chemical precursor that is used for the smaller particles. The binder may then be converted to a solid material using thermal, chemical, mechanical, sonic or optical energy.

One advantage of using a composite powder to fabricate a coating is that liquid or semi-solid chemical precursors can be used and made into composite powders to enable deposition of the coating in greater thicknesses than are available by processing of liquid precursors alone. For instance, the thicknesses available by using liquid precursors are limited by significant volume changes and associated cracking that occur during conversion of the precursor into the ceramic material. However, by incorporating the chemical precursor into a composite powder and using the powder to deposit the coating, it is possible to deposit the coating in greater thicknesses without the same concern for volume changes or cracking.

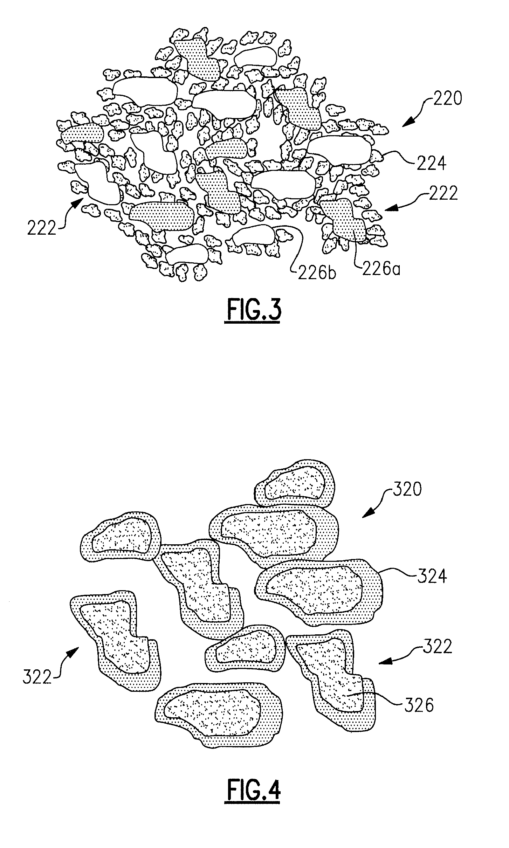

Figure 3 illustrates another example composite powder 220 that is somewhat similar to the example shown in Figure 2, except that the composite powder 220 includes discrete regions 226a of the second material and discrete regions 226b of another (fourth) material that is different than the first material and the second material (the composite powder does not necessarily include four materials, but since one of the materials may be a chemical precursor to a third material, the designation of "fourth" follows the convention herein). The fourth material may be any of the materials as described above with regard to Figure 1. In this case, the average particle sizes of the set of particles of the second material and the set of particles of the fourth material are larger than the average particle size of the set of particles of the first material.

Additionally, at least a portion of the particles of the first material may be attached to the particles of the second or fourth materials as a cladding. As described above with reference to Figure 2, the smaller particles may be attached, or clad, to the larger particles using milling, tumbling or mixing and, optionally, the binder.

In one example, the first material may be a chemical precursor and the second and fourth materials may, respectively, be two different metals or metal compounds, a metal and a ceramic, two different ceramics, a metal and a another chemical precursor, or other combinations of desired materials. Alternatively, the second and fourth materials may include at least one chemical precursor and the first material may be a metallic material, ceramic material, or another type of chemical precursor.

In this example, the volume percentage of the discrete regions 226a, 226b of the second and fourth materials relative to the combined volume of the discrete regions 224, 226a, and 226b may be 5%-95%. That is, the composite powder 220 may include a composition having between 5 vol% and 95 vol% of the second and fourth materials and a remainder of the first material.

Figure 4 illustrates another example composite powder 320. In this case, the structure of the composite powder 320 is such that the discrete regions 326 of the second material exists as particles within the composite powder 320 and the discrete regions 324 of the first material exist as a coating that at least partially surrounds the particles. That is, the particles of the second material may be considered to be particle cores that are surrounded by a coating of the first material. The first material may continuously surround the core particles such that the core particles are substantially or fully encapsulated. In one example, the average thickness of the discrete regions 324 is no greater than one-half of the average diameter of the core particles (discrete regions 326).

The coating may be a chemical precursor, such as a preceramic or partially converted preceramic polymer, an oligomeric or sol-gel material, and the core particles may be a metallic material, ceramic, glass or glass/ceramic material, or another type of chemical precursor. Alternatively, the core particles may include a chemical precursor and the coating may be a metallic material, ceramic, glass or glass/ceramic material, or another type of chemical precursor.

In one example of depositing the first material as a coating on the core particles, the core particles may be mechanically mixed with the first material to coat the core particles fully or partially. For instance, the first material may be a preceramic polymer, partially converted preceramic polymer, or an oligomeric or sol-gel material that coats the core particles upon mechanical mixing. Following coating, the coated core particles may be thermally treated in an inert atmosphere, such as argon, at a temperature below the complete conversion temperature of the polymer to partially convert the preceramic polymer. The partially converted preceramic polymer may be further or completely converted during thermal spraying or subsequent thermal treatment.

In another example, the first material may be dissolved in a suitable carrier solvent, such as an alcohol, to produce a coating solution. The core particles may then be dispersed in the coating solution and the solvent removed by reduced pressure and/or heating to deposit the first material onto the core particles. In other examples, the first material may be coated onto the core particles by spray drying, fluidized-bed spray granulation, or other technique.

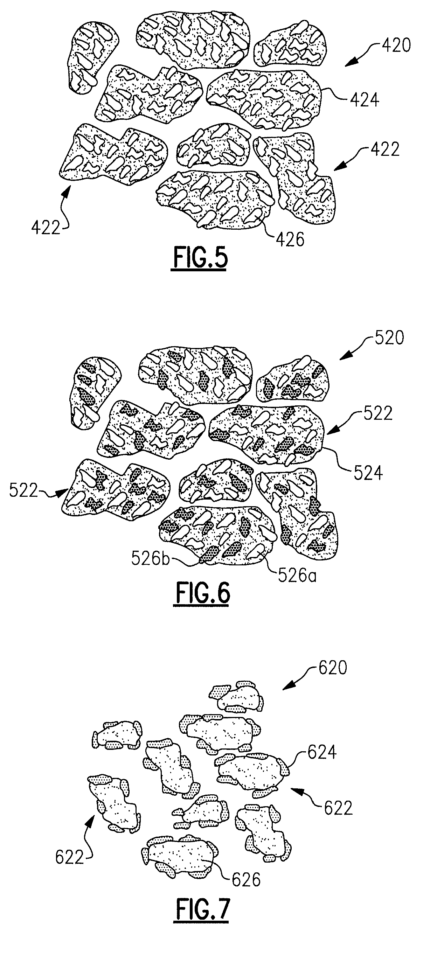

Figure 5 illustrates another example composite powder 420 having a structure that is somewhat similar to that shown in the example of Figure 4, except that the coating of the first material binds together multiple particles of the second material 426. As will be described below, the first material functions as a binder or adhesive to bind together multiple core particles of the second material to thereby form agglomerates as the loose particles 422.

In one example, the coating may be a chemical precursor, such as a preceramic or partially converted preceramic polymer, oligomeric or sol-gel precursor and the core particles may be a metallic material, ceramic, glass or glass/ceramic material, or another type of chemical precursor. Alternatively, the core particles may include a chemical precursor and the coating may be another type of chemical precursor or metallic material.

Similar to as described above with reference to Figure 4, the first material may be deposited as a coating that binds together the core particles. For instance, the core particles may be mechanically mixed with the first material to coat the core particles fully or partially. For instance, the first material may be a preceramic polymer, partially converted preceramic polymer, or an oligomeric or sol-gel material that coats the core particles upon mechanical mixing. Alternatively, the first material may be dissolved in a suitable carrier solvent, as also described above, or coated onto the core particles by spray drying, fluidized-bed spray granulation, or other technique.

In the illustrated example, the first material serves as a binder to form agglomerates that include the particles of the second material (and any additional particles of other materials). The binder may be used, for instance, to form agglomerates having a desired size for thermal spraying, material handling, or other characteristic. The binder may be a chemical precursor, such as a preceramic polymer (fully or partially converted), inorganic salt, oligomeric or sol-gel material. In addition to binding together particles of the second material, the binder may also serve as a source of a metallic or ceramic-producing material, which may react with the second material or other materials in the composite powder 420 or be converted to a metal, intermetallic, or ceramic material, such as a silicide, oxide, carbide, etc.

Figure 6 illustrates another example composite powder 520 that is somewhat similar to the example shown in Figure 5, except that the coating of the first material also binds together discrete regions 526b, or core particles, of a fourth material.

In one example, the coating may be a chemical precursor, such as a preceramic or partially converted preceramic polymer, and the core particles may be a metallic material, ceramic, glass or glass/ceramic material, another type of chemical precursor or combinations thereof. Alternatively, the core particles may include a chemical precursor and the coating may be another type of chemical precursor or metallic material.

In this example, the volume percentage of the discrete regions 526a, 526b of the second and fourth materials relative to the combined volume of the discrete regions 524, 526a, and 526b may be 5%-95%. That is, the composite powder 520 may include a composition having between 5 vol% and 95 vol% of the second and fourth materials and a remainder of the first material.

As in the example illustrated in Figure 6, the first material may be deposited as a coating that binds together the core particles, and the first material serves as a binder to form agglomerates that include the particles of the second material and fourth material (and any additional particles of other materials).

Figure 7 illustrates another example composite powder 620 having a structure such that the discrete regions 626 of the second material exist as particles within the composite powder 620 and the discrete regions 624 of the first material form a discontinuous coating around the particles of the second material 626. That is, the coating does not fully surround the core particles and at least portions of the surfaces of the core particles are exposed.

In one example, the discontinuous coating may be a chemical precursor, such as a preceramic or partially converted preceramic polymer, oligomeric or sol-gel precursor and the core particles may be a metallic material, ceramic, glass or glass/ceramic material, or another type of chemical precursor. Alternatively, the core particles may be a chemical precursor and the discontinuous coating may be another type of chemical precursor or a metallic material.

The composite powder 620 may be formed using any of the techniques described above with reference to Figures 2-6. In the alternative that the core particles are the chemical precursor and the discontinuous coating is the second material, such as a metallic material, the second material may be deposited onto the core particles using electroless or electrodeposition, deposition of a reducible metal salt, mechanical mixing of fine metal particles, or other techniques.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

Thus at least in the preferred embodiments, there is provided a composite powder in accordance with the following clauses.
1. A composite powder comprising: a plurality of loose particles comprising a first material and a second material that is different than the first material, and at least one of the first material and the second material is a chemical precursor to a third, different material.
2. The composite powder as recited in clause 1, wherein the first material is an inorganic material selected from a group consisting of metals, intermetallics, ceramics, and combinations thereof, and the second material is a chemical precursor comprising a preceramic or partially converted preceramic polymer.
3. A composite powder comprising: a plurality of loose particles having discrete regions of a first material comprising an inorganic material and discrete regions of a second material comprising a chemical precursor to a third, different material.
4. The composite powder as recited in clause 3, wherein the first material is an inorganic material selected from a group consisting of metallic materials, ceramic, glass and glass/ceramic materials, and combinations thereof, and the second material is a chemical precursor comprising a preceramic or partially converted preceramic polymer.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A composite powder (20; 120; 220; 320; 420; 520; 620) comprising:
a plurality of loose particles (22; 422) having discrete regions (24; 124; 224; 324; 524; 624) of a first material and discrete regions (26; 126; 226a; 326; 426; 526a; 626) of a second material that is different than the first material, and at least one of the first material and the second material comprises a chemical precursor to a third, different material.

2. The composite powder (20; 120; 220; 320; 420; 520; 620) as recited in claim 1, wherein the chemical precursor comprises a preceramic polymer or a partially converted preceramic polymer.

3. The composite powder (20; 120; 220; 320; 420; 520; 620) as recited in claim 1, wherein the first material comprises an inorganic material and the second material comprises a preceramic polymer.

4. The composite powder (20; 120; 220; 320; 420; 520; 620) as recited in any preceding claim, wherein the first material comprises a ceramic, glass or glass/ceramic material, or wherein the first material comprises a metallic material.

5. The composite powder (20; 120; 220; 320; 420; 520; 620) as recited in claim 4, wherein the metallic material is selected from a group consisting of an organometallic compound, a metal compound, elemental metal and metal alloy.

6. The composite powder (20; 120; 220; 320; 420; 520; 620) as recited in claim 1, wherein the first material comprises a first preceramic or partially converted preceramic polymer and the second material comprises a second preceramic or partially converted preceramic polymer that is different than the first preceramic polymer.

7. The composite powder (20; 120; 220; 320; 420; 520; 620) as recited in any preceding claim, wherein the plurality of loose particles (22; 422) comprise a first set of particles that include the discrete regions (24; 124; 224; 324; 524; 624) of the first material and a second, different set of particles that include the discrete regions (26; 126; 226a; 326; 426; 526a; 626) of the second material and that are mixed, preferably loosely, with the first set of particles.

8. The composite powder (20; 120; 220; 320; 420; 520; 620) as recited in claim 7, wherein the first set of particles are loosely mixed with each other and the second set of particles are attached to the first set of particles.

9. The composite powder (20; 120; 220; 320; 420; 520; 620) as recited in claim 8, wherein the first set of particles comprise a first average particle size and the second set of particles comprise a second average particle size that is larger than the first average particle size.

10. The composite powder (20; 120; 220; 320; 420; 520; 620) as recited in claim 9, wherein a ratio of the first average particle size to the second average particle size is 0.01-0.4.

11. The composite powder (20; 120; 220; 320; 420; 520; 620) as recited in claim 1, wherein the plurality of loose particles (22; 422) each include at least one core particle having the discrete regions (24; 124; 224; 324; 524; 624) of the first material and a coating comprising the discrete regions (26; 126; 226a; 326; 426; 526a; 626) of the second material disposed at least partially around the at least one core particle.

12. The composite powder (20; 120; 220; 320; 420; 520; 620) as recited in claim 11, wherein the coating comprises an average thickness that is no greater than one half of an average diameter of the core particles.

13. The composite powder (20; 120; 220; 320; 420; 520; 620) as recited in claim 11 or 12, wherein the coating binds multiple core particles together to form one of the plurality of loose particles (22; 422).

14. The composite powder (20; 120; 220; 320; 420; 520; 620) as recited in claim 1, wherein a volume percentage of the discrete regions (24; 124; 224; 324; 524; 624) of the first material relative to a combined volume of the discrete regions of the first material and the discrete regions (26; 126; 226a; 326; 426; 526a; 626) of the second material is 5%-95%.

15. The composite powder (20; 120; 220; 320; 420; 520; 620) as recited in claim 1, wherein the plurality of loose particles (22; 422) further comprise discrete regions of a fourth material (226b; 526b) that is different from the first material and the second material and is selected from a group consisting of metallic materials, organometallic compounds, ceramic, glass and glass/ceramic materials, and preceramic or partially converted preceramic polymers.
